**Europäisches Patentamt**

**European Patent Office**

**Office européen des brevets**

(19)

(11) Publication number: **0 013 051**
**B1**

(12) **EUROPEAN PATENT SPECIFICATION**

(45) Date of publication of patent specification: **25.04.84**

(21) Application number: **79200767.6**

(22) Date of filing: **15.12.79**

(51) Int. Cl.³: **C 08 L 55/02,**
**C 08 L 25/18, C 08 L 23/00,**
**C 08 L 77/00**

(54) Thermoplastic moulding material and article prepared thereof.

(30) Priority: **22.12.78 NL 7812461**

(43) Date of publication of application:
**09.07.80 Bulletin 80/14**

(45) Publication of the grant of the patent:
**25.04.84 Bulletin 84/17**

(84) Designated Contracting States:
**AT BE CH DE FR GB IT NL SE**

(56) References cited:
**EP - A - 0 000 141**
**EP - A - 0 002 514**
**DE - A - 2 132 358**
**DE - A - 2 515 473**
**DE - B - 2 703 419**
**US - A - 3 474 067**

The file contains technical information
submitted after the application was filed and not
included in this specification

(73) Proprietor: **STAMICARBON B.V.**
**Postbus 10**
**NL-6160 MC Geleen (NL)**

(72) Inventor: **de Man, Hendrikus Cornelis Johannes**
**Irenelaan 22**
**NL-6165 CP Geleen (NL)**
Inventor: **Smids, Petrus Theresa Johannes L.**
**Eburonenweg 52**
**NL-6224 HX Maastricht (NL)**

(74) Representative: **Hatzmann, Marinus Jan et al,**
**OCTROOIBUREAU DSM P.O.Box 9**
**NL-6160 MA Geleen (NL)**

Courier Press, Leamington Spa, England.

# Thermoplastic moulding material and article prepared thereof

The present invention relates to a thermoplastic moulding material consisting of a mixture of (a) 40—95% by weight of one or more thermoplastic polymers, (b) 5—55% by weight of a bromine-containing polymer, and (c) up to 15% by weight of one or more metal compounds.

In all kind of plastics applications, it is a requirement for these plastics to have flame-retarding properties. This applies in particular where these plastics are used in articles such as domestic appliances, in the automotive industry, and where they are used as building materials.

The usual method by which flame-retarding properties are imparted to the plastics is the blending-in of flame retardants most of which contain bromine, for example brominated diphenyl compounds. Together with antimony trioxide these flame retardants impart good flame-retarding properties to the plastics when they are included in the plastics mixture.

However, these flame retardants have a major disadvantage in that the processing of the plastics incorporating bromine-containing flame retardants can give rise to problems and specifically in that the flame retardant or decomposition products thereof may be released. This can cause an offensive odor and, in addition, it is possible in certain cases for noxious compounds to be released. In addition, these blended-in flame retardants have an unfavorable effect on the mechanical properties of the plastics in which they are contained.

Many proposals have been made to overcome such difficulties. A large number of these proposals simply amounts to the replacement of the bromine-containing compounds with compounds containing nitrogen and/or phosphorus which are simply blended in the plastic. Although in processing these compounds may give fewer problems than the bromine-containing flame retardants, for the most part they also have the disadvantage of adversely influencing the mechanical properties of the plastics while more often than not they are less effective than bromine-containing flame retardants.

In the U.S. Patent 3,474,067 polyolefin-based self-extinguishing moulding materials are described in which nuclear halogenated polystyrenes are incorporated in the composition. Although these compositions do not exhibit the disadvantages with respect to release of flame retardant or flame retardant decomposition products, the impact strength of the composition is undesirably decreased, especially if use is made of rubber reinforced polymer compositions such as ABS-polymers, high impact polystyrenes, high impact PVC, and the like.

Also, the nuclear halogenated polystyrenes have a negative influence on the heat distortion temperature of most polymers.

The object of the present invention is to provide a thermoplastic moulding material as described above which does not have the disadvantage mentioned for previously known materials.

The thermoplastic moulding material according to the present invention is characterized in that the bromine-containing polymer used is a polymer composed of (b-1) 95 to 25% by weight of bromostyrene, and (b-2) 5 to 75% by weight of acrylonitrile.

In particular the bromine-containing polymer used is a copolymer composed of 95 to 60% by weight of bromostyrene, and 5 to 40% by weight of acrylonitrile.

The term bromostyrene as used herein is to be understood as including styrene as well as alkylsubstituted styrene in which one or more hydrogen atoms in the benzene-nucleus have been replaced by bromine atoms, such as ortho-, meta- and parabromostyrene, or mixtures thereof.

Preferably the bromine-containing copolymer has a weight-average molecular weight of between 25,000 and 2,000,000, more in particular between 50,000 and 500,000, and the ratio of the weight-average molecular weight to the number-average molecular weight $(M_w/M_n)$, as determined by gel permeation chromatography, is between 1.5 and 5. The viscosity $(\eta_{0.1})$ of these bromine-containing polymers is preferably between 0.05 and 5. The value of $\eta_{0.1}$ as used herein indicates the relative viscosity at a concentration of 0.1 gram per 100 ml (g/dl) divided by the concentration in g per 100 ml, measured in dimethylformamide at a temperature of 20°C.

The bromine-containing copolymers can be prepared in various ways known for similar products. With reference to conventional polymerization procedures for styrene the skilled operator will determine a suitable process on the basis of routine experimentation.

He will take into account that, unlike styrene and acrylonitrile, bromostyrene and acrylonitrile do not show azeotropic characteristics during polymerization.

Examples of suitable polymerization processes include bulk, solution, suspension, emulsion and precipitation polymerization, and mixed forms thereof. These processes may be continuous, semi-continuous or batch-processes. One mode of conducting a process for the preparation of bromine-containing polymers is characterized in that 25 to 100 parts by weight of bromostyrene are added, continuously or batch-wise, to an aqueous emulsion of 5 to 40 parts by weight of acrylonitrile, 0 to 25 parts by weight of one or more compounds from the group composed of alpha-methylstyrene, maleic anhydride, vinylacetate, and esters of acrylic acid and/or methacrylic acid, 0 to 25 parts by weight of bromostyrene, and a small quantity of emulsifier, in the presence of a compound yielding water-soluble free radicals to the polymerization reaction mixture, and, optionally, in the presence of a chain-transfer agent. Upon completion of the polymerization reaction 60 to 95% by weight of copolymerized

2

bromostyrene is present in the resulting polymer.

Another method of preparing a suitable bromine-containing polymer is characterized in that (1) an emulsion is prepared which contains 5 to 40 parts by weight of acrylonitrile, 60 to 95 parts by weight of bromostyrene, 0 to 25 parts by weight of one or more additional monomers, a compound yielding free radicals, an emulsifier, and, optionally, a chain-transfer agent. A portion of 10 to 40% of this emulsion is raised to the reaction temperature in a suitable polymerization reactor, and (2) the remaining portion of the emulsion is supplied to the reactor at a rate lower than that at which the polymer is formed.

In certain cases it may be preferable to prepare an alternate copolymer of acrylonitrile and bromostyrene by copolymerizing equimolar amounts of acrylonitrile and bromostyrene in the presence of a compound such as zinc chloride.

The application of the bromine-containing polymers as flame retardants in thermoplastic moulding materials exhibits substantial advantage over the addition of the known flame retardants, such as brominated diphenyl compounds and diphenyloxide.

Due to their high molecular weight the bromine-containing compounds do not tend to diffuse from the moulding material in which they are incorporated during processing, for example in an extruder. Additionally no flame retardant will diffuse from the processed, finished product, which is highly important if the product can come into contact with foods, for example when the moulding material is used to fabricate domestic appliances.

As the bromine-containing polymer possesses good mechanical properties by itself, for example rigidity and thermoformability, the problem of deterioration in mechanical properties does not occur, or if at all may occur only to a very small degree. By contrast when conventional flame retardants or brominated polystyrenes are blended with thermoplastics, such as ABS-resins, the impact resistance may fall to virtually unacceptable commercial values. As regards the thermoforming temperature (Vicat, HDT), various resins blended with a bromine-containing compound in according with the invention even show an improvement over the original resins, as in the case of ABS.

In a number of cases it may be desirable to add one or more metal compounds to further improve the flame-retarding properties. A suitable compound is antimony trioxide but other metal compounds can also be used as well.

The bromine-containing polymers are particularly suitable as flame retardants in various thermoplastic polymers, but they are eminently suitable in styrene, for example homopolystyrene, copolymers of styrene such as styrene acrylonitrile copolymers (SAN), high-impact homopolystyrene (HIPS) and rubber-modified SAN (ABS).

This applies with particular force to ABS plastics, because the products according to the present invention are structurally very closely related to the continuous phase of ABS, that is the styrene/acrylonitrile copolymer matrix. A great advantage in the case of ABS is, moreover, that the products according to the present invention can be added in the place of (part of) the styrene acrylonitrile copolymers that are normally added.

Accordingly the following polymer composition is preferably used as component (a) in the thermoplastic moulding material:

(d) 25—100% by weight of a graft copolymer consisting of 25—95 parts by weight of a monomer mixture polymerized in the presence of 5—75 parts by weight of a rubber and composed of

(d-1) 100—50% by weight of styrene, alpha-methylstyrene, or mixtures thereof, and

(d-2) 50—0% by weight of acrylonitrile, methacrylonitrile, methylmethacrylate, or mixtures thereof, and

(e) 0—75% by weight of a polymer of

(e-1) 95—50% by weight of styrene, alpha-methylstyrene, or mixtures thereof, and

(e-2) 50—5% by weight of acrylonitrile, methacrylonitrile, methylmethacrylate, or mixtures thereof.

The rubbers used are preferably the rubbers customarily employed for rubber-modified styrene homo- or copolymers, such as rubbers based on butadiene, for example polybutadiene, styrenebutadiene rubber, and butadiene-acrylonitrile rubber; rubbers based on ethylene-propylene terpolymers, such as EPDM; nitrile rubbers; acrylate rubbers and the like.

An added advantage of the bromine containing polymers as compared with the known brominated flame retardant compounds is that the glass transition temperature of the rubber phase in ABS and HIPS remains unaffected. As a practical consequence this means that the deterioration in properties at very low temperatures, usually noticed when bromine-containing flame retardant compounds are blended in, does not occur.

In another preferred method of practicing the present invention, component (a) is a polymer composed of:

100—50% by weight of styrene, alpha-methylstyrene, or mixtures thereof, and

0—50% by weight of acrylonitrile, methylacrylonitrile, methylmethacrylate, or mixtures thereof.

Further, bromine-containing copolymers of the type described herein are very suitable for the addition to polyolefins, such as polypropylene, polyethylene, ethylene-propylene copolymers, polyamides and mixtures thereof.

Also vinylchloride polymers can be used with advantage as thermoplastic polymer component of the moulding compositions. Moulding materials according to the present invention that are based on vinylchloride polymers offer the advantage that the Vicat temperature, a measure of the material's thermoformability, is considerably higher than that of the vinylchloride polymers themselves, while the favorable behavior of fire retardant properties are retained.

The compounds forming the moulding materials according to the present invention can be prepared in various known ways, for instance by blending in an extruder.

The invention is also directed to articles moulded in whole or in part from the disclosed moulding material.

The invention will now be further illustrated by means of the following examples, without being restricted thereto.

Examples I—V and Comparative Examples VI and VII

Table 2 shows a number of properties of five moulding materials produced according to the present invention containing as the thermoplastic polymer ABS or a mixture of ABS and SAN. Table 1 shows the compositions of the bromine-containing polymers that were included in moulding materials I—V.

The ABS used was a type of graft polymer of styrene and acrylonitrile to polybutadiene of high impact strength, with a styrene-acrylonitrile copolymer added to it in a number of cases.

TABLE 1

| Bromine-containing Polymers | A | B | C | D | E | F |
|---|---|---|---|---|---|---|
| bromostyrene (% wt.) | 91 | 73 | 73 | 73 | 80 | 81 |
| acrylonitrile (% wt.) | 9 | 27 | 27 | 27 | 20 | 19 |
| bromine, % | 40 | 32 | 32 | 32.6 | 33 | 35.9 |

4

TABLE 2

| Example | I | II | III | IV | V | VI | VII |
|---|---|---|---|---|---|---|---|
| ABS (% wt.) | 55 | 55 | 58 | 54 | 54 | 65 | 55 |
| SAN (% wt.) | 7 | — | 5 | — | — | 35 | 22 |
| A (% wt.) | 30 | — | — | — | — | — | — |
| B (% wt.) | — | 37 | 37 | — | — | — | — |
| C (% wt.) | — | — | — | 38 | — | — | — |
| D (% wt.) | — | — | — | — | 38 | — | — |
| $Sb_2O_3$ (% wt.) | 8 | 8 | — | 8 | 8 | — | 8 |
| brominated diphenyl compound | — | — | — | — | — | — | 15 |
| E modulus, $N/mm^3$ | 2465 | 2600 | 2550 | 2560 | 2460 | 2400 | 2400 |
| bending strength, $N/mm^3$ | 75 | 78 | 77 | 73 | 76 | 76 | 74 |
| Izod, $kJ/m^2$ | 20 | 18 | 38 | 15 | 20 | 42 | 12 |
| HDT (annealed), °C | 97 | 99 | 98 | 99 | 100 | 96 | 92 |
| UL 94 classification* | | | | | | | |
| 1.6 mm | HB-O | Vo | — | Vo | Vo | — | Vo |
| 3.2 mm | Vo | Vo | HB | Vo | Vo | — | Vo |

* According to the Underwriters Laboratory test 94 for the indicated test sample thickness.

None of the moulding materials according to Examples I—VI caused odor problems. When moulding material VII was being processed part of the brominated diphenyl fire-retardant compound decomposed, so that special measures had to be taken to prevent operator and user annoyance.

These examples clearly show that the thermoplastic moulding materials according to the present invention possess physical properties that are at least comparable to those of thermoplastic polymers having incorporated a brominated diphenyl compound as flame retardant.

**0 013 051**

Examples IX and XI and Comparative Examples VIII and X
Table 3 shows the fire retarding properties of a number of compounds having the composition given in the table.

TABLE 3

| Example | VIII | IX | X | XI |
|---|---|---|---|---|
| thermoplastic polymer | polypropylene | polypropylene | nylon-6 | nylon-6 |
| Amount (%) | 100 | 49 | 100 | 50 |
| Bromine containing polymer type | — | E | — | F |
| Bromine containing amount (%) | — | 42 | — | 41 |
| $Sb_2O_3$ | — | 9 | — | 9 |
| Bromine content of compound | — | 15 | — | 15 |
| UL 94 classification*, 3.2 mm | HB | V2 | HB | VO |

— all percentages given are by weight
* see Table 2

## Claims

1. Thermoplastic moulding material consisting of a mixture of
(a) 40 to 95% by weight of one or more thermoplastic polymers,
(b) 5 to 55% by weight of a polymer containing bromine, and
(c) 0 to 15% by weight of at least one fire retardant metal compound, characterized in that said bromine-containing polymer is a polymer consisting essentially of
(b-1) 95 to 25% by weight of bromostyrene,
(b-2) 5 to 75% by weight of acrylonitrile.
2. Moulding material according to claim 1, wherein the component (b) is a copolymer composed of 95 to 60% by weight of bromostyrene, and 5 to 40% by weight of acrylonitrile.
3. Moulding material according to claim 1 or 2, wherein component (a) is a mixture of
(d) 25 to 100% by weight of a graft copolymer consisting of 25—95 parts by weight of a monomer mixture polymerized in the presence of 5—75 parts by weight of a rubber and composed of
(d-1) 100 to 50% by weight of styrene, alphamethylstyrene, or mixtures thereof, and
(d-2) 50 to 0% by weight of acrylonitrile, methacrylonitrile, methylmethacrylate, or mixtures thereof, and
(e) 75 to 0% by weight of a polymer of (e-1) 95 to 50% by weight of styrene, alpha-methylstyrene, or a mixture thereof, and
(e-1) 95 to 50% by weight of styrene, alpha-methylstyrene, or a mixture thereof, and
(e-2) 50 to 5% by weight of acrylonitrile, methacrylonitrile, methylmethacrylate, or mixtures thereof.
4. The moulding material according to claim 1—3, characterized in that component (a) is a polymer composed of
100 to 50% by weight of styrene, alpha-methylstyrene, or a mixture thereof, and
0 to 50% by weight of acrylonitrile, methacrylonitrile, methylmethacrylate, or mixtures thereof.
5. An article moulded in whole or in part from the moulding material according to one of the claims 1—4.

## Revendications

1. Matière à mouler thermoplastique consistant en un mélange de
(a) 40 à 95 % en poids d'un ou plusieurs polymères thermoplastiques,
(b) 5 à 55 % en poids d'un polymère contenant du brome, et
(c) 0 à 15 % en poids d'au moins un composé de métal ralentissant la combustion, caractérisée en ce que le polymère contenant du brome est un polymère constitué essentiellement de

6

(b-1) 95 à 25 % en poids de bromostyrène,

(b-2) 5 à 75 % en poids d'acrylonitrile.

2. Matière à mouler selon la revendication 1, dans laquelle le constituant (b) est un copolymère composé de 95 à 60 % en poids de bromostyrène et de 5 à 40 % en poids d'acrylonitrile.

3. Matière à mouler selon la revendication 1 ou 2, dans laquelle le constituant (a) est un mélange de

(d) 25 à 100 % en poids d'un copolymère greffé consistant en 25—95 parties en poids d'un mélange de monomères polymérisé en présence de 5—75 parties en poids d'un caoutchouc et composé de

(d-1) 100 à 50 % en poids de styrène, d'alpha-méthylstyrène ou de leurs mélanges, et

(d-2) 50 à 0 % en poids d'acrylonitrile, de méthacrylonitrile, de méthacrylate de méthyl ou de leurs mélanges, et

(e) 75 à 0 % en poids d'un polymère de

(e-1) 95 à 50 % en poids de styrène, d'alpha-méthylstyrène ou d'un mélange de ces composés et

(e-2) 50 à 5 % en poids d'acrylonitrile, de méthacrylonitrile, de méthacrylate de méthyle ou de leurs mélanges.

4. La matière à mouler selon l'une des revendications 1—3, caractérisée en ce que le constituant (a) est un polymère composé de 100 à 50 % en poids de styrène, d'alpha-méthylstyrène ou d'un mélange de ces composés et de 0 à 50 % en poids d'acrylonitrile, de méthacrylonitrile, de méthacrylate de méthyle ou de leurs mélanges.

5. Un article moulé en totalité ou en partie à partie de la matière à mouler selon l'une des revendications 1—4.

## Patentansprüche

1. Thermoplastische Formmasse, bestehend aus einem Gemisch von

(a) 40 bis 95 Gew.-% eines oder mehrerer thermoplastischer Polymerer,

(b) 5 bis 55 Gew.-% mindestens eines bromhältigen Polymeren und

(c) 0 bis 15 Gew.-% mindestens einer flammhemmenden Metallverbindung, dadurch gekennzeichnet, daß das bromhältige Polymere ein Polymeres ist, das im wesentlichen aus

(b-1) 95 bis 25 Gew.-% Bromstyrol,

(b-2) 5 bis 75 Gew.-% Acrylonitril besteht.

2. Formmasse nach Anspruch 1, dadurch gekennzeichnet, daß die Komponente (b) ein aus 95 bis 60 Gew.-% Bromstyrol und 5 bis 40 Gew.-% Acrylonitril zusammengesetztes Copolymeres ist.

3. Formmasse nach Anspruch 1 oder 2, dadurch gekennzeichnet, daß die Komponente (a) ein Gemisch ist von

(d) 25 bis 100 Gew.-% eines Pfropfcopolymeren bestehend aus 25—95 Gew.-Teilen eines in Gegenwart von 5—75 Gew.-Teilen eines Kautschuks polymerisierten Monomerengemischens, das aus

(d-1) 100 bis 50 Gew.%- Styrol, $\alpha$-Methylstyrol oder Gemischen davon und

(d-2) 50 bis 0 Gew.-% Acrylonitril, Methacrylonitril, Methylmethacrylat oder Gemischen davon zusammengesetzt ist, und

(e) 75 bis 0 Gew.-% eines Polymeren von

(e-1) 95 bis 50 Gew.-% Styrol, $\alpha$-Methylstyrol oder einem Gemisch davon und

(e-2) 50 bis 5 Gew.-% Acrylonitril, Methacrylonitril, Methylmethacrylat oder Gemischen davon.

4. Formmasse nach den Ansprüchen 1 bis 3, dadurch gekennzeichnet, daß die Komponente (a) ein Polymeres aus 100 bis 50 Gew.-% Styrol, $\alpha$-Methylstyrol oder einem Gemisch davon und 0 bis 50 Gew.-% Acrylonitril, Methacrylonitril, Methylmethacrylat oder Gemischen davon ist.

5. Formgegenstand, ganz oder zum Teil hergestellt aus einer Formmasse gemäß einem der Ansprüche 1 bis 4.